(19) Europäisches Patentamt
European Patent Office
Office européen des brevets

(11) **EP 2 532 576 A1**

(12) **EUROPEAN PATENT APPLICATION**

(43) Date of publication:
**12.12.2012 Bulletin 2012/50**

(51) Int Cl.:
***B62M 6/45*** *(2010.01)*

(21) Application number: **12171542.9**

(22) Date of filing: **11.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.06.2011 EP 11169534**

(71) Applicant: **Koninklijke Gazelle B.V.**
**6951 BP Dieren (NL)**

(72) Inventors:
• **Veltman, André**
**4101 BW Culemborg (NL)**
• **Van Norel, Wichert**
**8096 XX Oldebroek (NL)**

(74) Representative: **De Vries & Metman**
**Overschiestraat 180**
**1062 XK Amsterdam (NL)**

(54) **Cycle comprising an electric motor**

(57) The invention relates to a cycle, in particular a bicycle (1), comprising a frame (2), wheels (3,4), an axle (5), pedals (6) mounted on the axle (5) via cranks (7), a transmission (8,9) coupling the axle (5) to at least one of the wheels (4), an electric motor (10) for driving at least one of the wheels (4), a means (13) for measuring the speed of the cycle (1), and a controller (11) for driving the motor (10) in dependence of the torque exerted on the axle (5). The means (13) for measuring the speed of the cycle (1) are coupled to a module (14) that is arranged to estimate, based on variations in the speed of the cycle (1), a parameter proportional to the torque exerted on the axle (5).

Fig.2

EP 2 532 576 A1

## Description

The invention relates to a cycle, in particular a bicycle, comprising a frame, wheels, an axle, pedals mounted on the axle via cranks, a transmission coupling the axle to at least one of the wheels, an electric motor for driving at least one of the wheels and located e.g. in the hub of one of the wheels or coupled to the axle, a means for measuring the speed of the cycle, and a controller for driving the motor in dependence of the torque exerted on the pedals by a person riding the cycle.

EP 559 231 relates to a bicycle and a method for powering the same, said bicycle comprising a manpower drive system and an electric motor drive system in parallel to each other. In the bicycle disclosed in EP 559 231, "the delay between motor force generation in response to a variation of the riders pedal depressing force after passing top or bottom dead centres of the crank pedals are minimized or substantially zero by means of that a minimal drive voltage of the electric motor is maintained on a level of a non-load drive voltage which corresponds to a motor revolution speed which represents the cruising speed of the vehicle. Accordingly, the pedal depressing force, as well as the bicycle speed, are detected [by pedal force detection means 65 and vehicle speed detection means 84; see Figures 2 to 5 of EP 559 231] and the electric motor of the electric motor drive system is supplied with a motor voltage which, at least, leads to a motor revolution speed corresponding to the cruising speed of the bicycle."

WO 2006/091089 relates to a bicycle dropout for a (rear) wheel with integrated chain force sensor, comprising: a frame connecting part (numeral 53 in Figures 3A and 3B of WO 2006/091089) intended for connecting to a bicycle frame (10); an axle receiving part (51) intended for connecting to a wheel axle (21); an elastically deformable transition part (61, 62) between the frame connecting part (53) and the axle receiving part (51); and at least one sensor (70) for providing a measuring signal which is indicative for a mutual displacement between the frame connecting part (53) and the axle receiving part (51) and/or a deformation of the transition part (61, 62).

NL 2001292 discloses a similar device.

DE 10 2009 000 919 relates to a method of operating a motor-supported vehicle, in particular a bicycle. The desired drive support is determined through a dynamic evaluation of the rotational speed of the crank, without an actual measurement of treading force or the torque with respect to the bottom bracket axle.

US 2008/071436 relates to an energy management system for a motor-assisted user-propelled vehicle comprising a motor capable of assisting in propelling the vehicle and a rechargeable power supply for supplying energy to the motor. In an aspect, the system comprises a sensor for detecting slight cyclic variations in a speed of the vehicle and generating a vehicle speed signal; and a differentiator for differentiating the vehicle speed signal to obtain a vehicle acceleration signal; where slight cyclic variations of the acceleration signal due to the cyclic user vehicle propulsion efforts is used to deduct the proportional cyclic user effort.

Sensors for measuring torque, e.g. by measuring distortions in the bottom bracket axle, in the cranks or in the frame of the bicycle are expensive and require modification of one or more components of the bicycle, e.g. the frame, complicating manufacture and logistics.

It is an object of the present invention to provide a cycle, in particular a bicycle, comprising an electric motor that provides support in dependence of the torque exerted by the cyclist, but without the need for a sensor for measuring that torque.

To this end, the cycle according to the present invention is **characterized in that** the means for measuring the speed of the cycle are coupled to a module that is arranged to estimate, based on variations in the speed of the cycle, a parameter that is proportional to the torque exerted on the axle.

The torque exerted by a cyclist on the bottom bracket axle by means of the pedals varies continuously and at a frequency of twice the cadence (cadence is defined as the frequency of the axle and pedals). In other words, the cyclist exerts a downward force twice per revolution and, as a result, the speed of the cycle (and cyclist) varies at this same frequency.

Measurements and calculations have shown that at an average speed of 20 km/h on a level road and with a total weight of cycle and cyclist of 100 kg and typical (air and rolling) resistance, the variations, emerging as a ripple in the speed, have an amplitude of approximately 0.05 km/h. It was found that this ripple contains sufficient information to estimate (the value of) a parameter proportional to the torque exerted by the cyclist. The scale factor between this proportional parameter and the actual torque (in Nm) depends on the transmission ratio between the pedals and the cycle speed and on the total accelerated mass of the bicycle plus cyclist.

By using this estimate in controlling the motor, in practice no sensor for measuring torque is required, thus reducing costs and simplifying logistics, e.g. because no special frames are required for cycles comprising an electric motor and corresponding sensor.

It should be noted that the estimate provides a relative rather than an absolute value representing torque. E.g., the variations in speed will be smaller when the cycle is ridden by a heavier cyclist and/or if the cycle carries a load and the variations will be greater when the cycle is ridden by a lighter cyclist. To enable the cyclist to compensate for this, the cycle is preferably provided with a human-machine interface to set the support supplied by the electric motor, e.g. to 10%, 20%, 30%, or 40% of the estimate of the power delivered by the cyclist. If required, the support can be much larger, e.g. it can be such that the cyclist only needs to produce a fraction of the total power, this implies that the support could be 200% or even 300% of the cyclist power.

Further, the estimate may contain other components that have a frequency that equals twice the cadence. E.g. when the cyclist rocks back and forth at a frequency of twice the cadence, the variations of the speed increase and thus the estimated value of the torque increases. In consequence, the support provided by the electric motor will increase. This phenomenon can be employed by the cyclist to temporarily induce extra support, e.g. by rocking back and forth at the appropriate frequency when climbing a ramp or short slope.

The module for estimating a parameter proportional to torque can be integrated on the printed circuit board (PCB) of the controller for driving the motor, but can also be located elsewhere, e.g. in a human-machine interface on the handlebar of the cycle.

To obtain a more accurate estimate of the torque exerted, it is preferred that the means for measuring the speed provides a sampling rate of at least 50, preferably at least 100, preferably at least 250 samples per second, preferably at least 500 samples per second, and/or provides an amplitude resolution of at least 10 bits, preferably at least 12 bits, preferably at least 16 bits.

In an embodiment, the means for measuring the speed comprises a sensor coupled to at least one of the wheels or the axle. Examples include, but are not limited to, an encoder wheel, mounted on the hub or defined on or at the rim of one of the wheels or mounted to the bottom bracket axle, and a plurality of magnets on e.g. the rim or spokes of one of the wheels combined with a reed switch on the frame, e.g. on the fork.

In another embodiment, the means for measuring the speed of the cycle is coupled to the motor, i.e. the rotational speed of the motor is used to the measure the speed of the bicycle.

In further embodiment, the cycle comprises a filter for extracting, from the speed measurements, the variations in the cycle speed. The filter is typically implemented in the form of software on a semiconductor device, e.g. a microcontroller.

In a further embodiment, the filter is a selective filter tuned to a frequency that is substantially equal to twice the cadence.

By tuning, preferably continuously, the selective filter substantially to the (instant) cadence, the signal to noise ratio (SNR) is improved and/or the amplitude of the output signal is proportional to the torque exerted on the axle and inversely proportional the total mass of the cycle and cyclist.

The selective filter preferably has a relative damping in a range from 0.1 to 2, preferably in a range from 0.2 to 1. Higher relative damping enables the filter to respond faster to changes in cadence, lower relative damping reduces the effects of noise.

In an embodiment, the electric motor is a brushless motor. Employing such a motor appeared to further facilitate accurately measuring the rotational speed of the motor and extracting from the measurements accurate information to estimate a parameter proportional to the torque exerted by the cyclist.

In a further embodiment, the cycle comprises a sensor for measuring the cadence of the pedals, e.g. a proximity sensor triggered by the teeth on the (front) chain wheel, and/or the controller is arranged to derive the cadence from cycle speed and the transmission ratio between the pedals and the cycle speed. In view of the current state of legislation and technology, it is preferred that the cycle comprises a separate sensor for cadence, because this will enable the controller to react more directly to the cyclist stopping or starting applying pedal force. Also, no knowledge of the transmission ratio is required.

In a general embodiment, the transmission of the bicycle comprises a first chain wheel or pulley coupled with the axle, a second chain wheel or pulley coupled with one of the wheels and a chain or belt for driving the second chain wheel or pulley with the first chain wheel or pulley at a fixed reduction between the chain wheels or pulleys.

The invention further relates to a method of estimating a parameter proportional to the torque exerted on the axle carrying the pedals of a cycle comprising the steps of measuring the speed of the cycle and estimating the parameter based on variations in the speed of the cycle.

In an embodiment, the method further comprises the step of driving the motor in dependence of the estimated parameter proportional to the torque on the axle.

In another embodiment, the speed is measured at a sampling rate of at least 50, preferably at least 100, preferably at least 250 samples per second, preferably at least 500 samples per second, and/or at an amplitude resolution of at least 10 bits, preferably at least 12 bits, preferably at least 16 bits.

Within the framework of the invention the term "torque" includes derivatives, such as power, i.e. torque multiplied by cadence, and pedal force, from which torque can be calculated using other information available. Similarly, "cycle speed" and "speed of the cycle" need not be expressed in units of distance per units of time, such as meters per second, but could also be represented by other parameters proportional to the cycle speed, for instance pulses per second or rotational speed of the motor, preferably with the relation between that parameter and cycle speed being known. Thus, in addition to the means for measuring said speed, e.g. at the motor, the bicycle may comprise further means for measuring speed e.g. via a magnet on the front wheel and a display on the handlebar.

A suitable example of a parameter that is proportional to the torque exerted on the axle is the amplitude of the variations of the speed of the bicycle at a frequency of twice the cadence.

The invention will now be explained in more detail with reference to the drawings, which show a preferred embodiment of the present invention.

Figure 1 is side view of a bicycle according to the present invention comprising an electric motor and a controller.

Figure 2 is a diagram showing a module for estimating torque and its interaction with the electric motor and a human-machine interface.

Figure 3 is diagram of a selective filter for estimating torque based on speed.

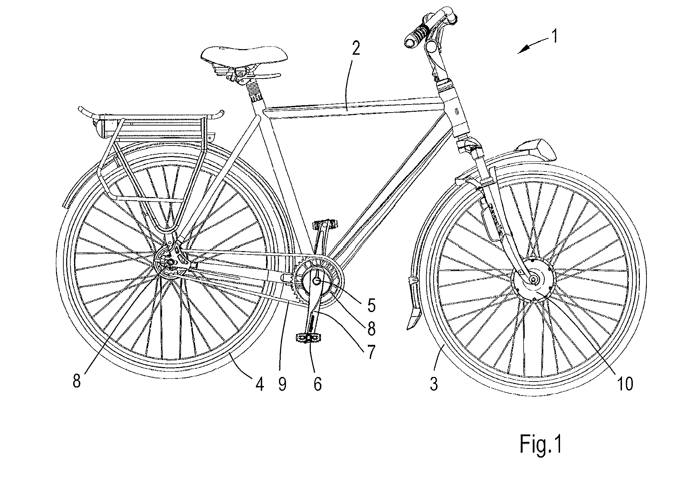

Figure 1 shows a bicycle 1 comprising a frame 2, two wheels 3, 4, a bottom bracket axle 5, pedals 6 mounted on the axle via cranks 7, and a transmission, i.e. standard chain gears 8 and a chain 9, coupling the axle and thus the pedals to the rear wheel 4.

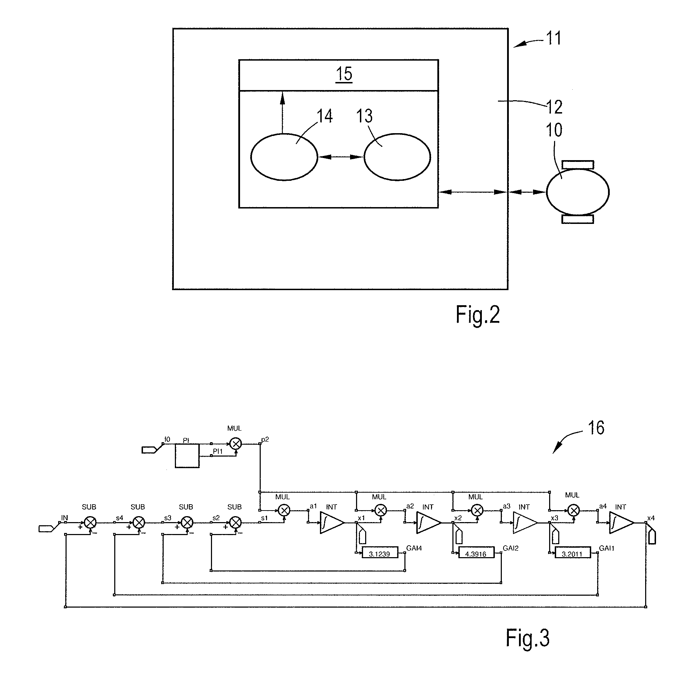

An electric motor 10 is integrated in the hub of the front wheel 3. A controller 11 (Figure 2) for the electric motor is e.g. integrated in the motor itself or accommodated inside the frame 2 of the bicycle. In this example, the controller comprises a printed circuit board (PCB) 12 provided with integrated circuits and/or microcontrollers on which are implemented a (low level) software module 13 for measuring the speed of the bicycle from the rotational speed of the motor and a (low level) software module 14 for estimating torque exerted on the axle by the cyclist. The controller further comprises a (high level) software module 15 for retrieving settings, such as the desired degree of support by the electric motor, from and sending information, such a speed, to a human-machine interface (not shown) mounted on the handlebar of the bicycle. The controller is arranged to drive the electric motor in dependence of estimated torque, in this example proportional to that torque.

Figure 3 shows an example of a fourth order filter 16 for estimating torque exerted on the bottom bracket axle based speed of the bicycle, implemented by means of the module 15. The filter comprises two inputs, viz. the rotational speed (instant electric frequency) of the motor representative of the bicycle speed and denoted by "IN" and the effective cut-off frequency, fo (in Hz).

As mentioned, in this example, the speed is measured by means of a software module (13), which samples the instant electric frequency of the motor at a sample rate of 1000 samples per second and a resolution of 32 bits.

Frequency fo equals the cadence of the cyclist multiplied by 2 and is e.g. measured directly at the pedals or derived from the absolute rotational speed of the motor and transmission ratio of that rotational speed and cadence.

The filter further comprises four outputs, x1, x2, x3, and x4. The fourth order filter behaves as a low-pass filter from input IN to output x4, which implies that the average value of x4 will be equal to the average value of IN, i.e., at constant speed x1, x2, and x3 are all equal to 0. During linear acceleration x4 will increase linearly and x3 (acceleration) will be constant; x1 and x2 are derivatives of a constant and thus 0.

However, at a frequency of fo the signals at outputs x1 to x4 all have an equal amplitude, proportional to the amplitude of the sinusoid input signal at IN. The torque estimate is proportional to:

$$T = x4\sqrt{x1^2 + x2^2}$$

Further filters can be included. For instance, an additional low-pass filter can be added for removing signal components generated by the road. A notch-filter can be included to suppress signal components having a frequency fo.

The invention is not restricted to the above-described embodiments, which can be varied in a number of ways within the scope of the claims. For instance, torque can be estimate by means of Fourier analysis, by calculating the intensity of the frequency component having frequency fo.

Further, the invention is equally suitable for use in other cycles, such as (carrier) tricycles.

**Claims**

1. Cycle, in particular a bicycle (1), comprising a frame (2), wheels (3,4), an axle (5), pedals (6) mounted on the axle (5) via cranks (7), a transmission (8,9) coupling the axle (5) to at least one of the wheels (4), an electric motor (10) for driving at least one of the wheels (4), a means (13) for measuring the speed of the cycle (1), and a controller (11) for driving the motor (10) in dependence of the torque exerted on the axle (5), **characterised in that** the means (13) for measuring the speed of the cycle (1) are coupled to a module (14) that is arranged to estimate, based on variations in the speed of the cycle (1), a parameter proportional to the torque exerted on the axle (5).

2. Cycle (1) according to claim 1, wherein the means (13) for measuring the speed provides a sampling rate of at least 50, preferably at least 100, preferably at least 250 samples per second, preferably at least 500 samples per second.

3. Cycle (1) according to claim 1 or 2, wherein the means (13) for measuring the speed provides an amplitude resolution of at least 10 bits, preferably at least 12 bits, preferably at least 16 bits.

4. Cycle (1) according to any one of the preceding claims, wherein the means for measuring the speed of the cycle (1) comprises a sensor coupled to at least one of the wheels (3,4) or the axle (5).

5. Cycle (1) according to any one of the preceding claims, wherein the means (13) for measuring the speed of the cycle (1) is coupled to the motor (10).

**6.** Cycle (1) according to any one of the preceding claims, comprising a filter (16) for extracting, from the speed measurements, the variations in the cycle speed.

**7.** Cycle (1) according to claim 6, wherein the filter (16) is a selective filter tuned to a frequency that is substantially equal to twice the cadence and preferably having a relative damping in a range from 0.1 to 2, preferably in a range from 0.2 to 1.

**8.** Cycle (1) according to any one of the preceding claims, comprising a sensor for measuring the cadence of the pedals (6) and/or wherein the controller (11) is arranged to derive the cadence from cycle speed and the transmission ratio between the pedals (6) and the cycle speed.

**9.** Cycle (1) according to any one of the preceding claims, comprising an human-machine interface for inputting at least one of mass, e.g. of the cycle and/or cyclist, transmission ratio and desired support.

**10.** Method of estimating, in a cycle (1) comprising a frame (2), wheels (3,4), an axle (5), pedals (6) mounted on the axle (5) via cranks (7), a transmission (8,9) coupling the axle (5) to at least one of the wheels (4), and an electric motor (10) for driving at least one of the wheels (4) in dependence of the torque exerted on the axle (5) carrying the pedals (6), comprising the steps of
measuring the speed of the cycle (1) and estimating a parameter proportional to the torque based on variations in the speed of the cycle (1).

**11.** Method according to claim 10, comprising the step of driving the motor (10) in dependence of the estimated parameter.

**12.** Method according to claim 10 or 11, wherein the speed is measured at a sampling rate of at least 50, preferably at least 100, preferably at least 250 samples, preferably at least 500 samples per second.

**13.** Method according to any one of claims 10-12, wherein the speed is measured at an amplitude resolution of at least 10 bits, preferably at least 12 bits, preferably at least 16 bits.

**14.** Method according to any one of claims 10-13, comprising extracting, from the speed measurements and by means of a filter (16), the variations in the cycle speed, preferably selectively by tuning the filter to a frequency that is substantially equal to twice the cadence.

**15.** Method according to any one of claims 10-14, comprising measuring the cadence of the pedals (6) and/or deriving the cadence from cycle speed and the transmission ratio between the pedals (6) and the cycle speed.

Fig.1

Fig.2

Fig.3

Europäisches
Patentamt

European
Patent Office

Office européen
des brevets

# EUROPEAN SEARCH REPORT

**Application Number**

EP 12 17 1542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DE 10 2009 000919 A1 (BOSCH GMBH ROBERT [DE]) 19 August 2010 (2010-08-19)<br>* abstract; figures *<br>* paragraph [0008] - paragraph [0010] *<br>* paragraph [0012] - paragraph [0013] *<br>* paragraph [0027] *<br>----- | 1-15 | INV.<br>B62M6/45 |
| X | DE 196 01 194 A1 (STAMM MICHAEL [DE]; GEBLER DIRK [DE])<br>24 July 1997 (1997-07-24)<br>* abstract; figures *<br>* column 3, line 40 - column 4, line 7 *<br>----- | 1-4,6,<br>8-15 | |
| X,D | US 2008/071436 A1 (DUBE JEAN-YVES [CA] ET AL) 20 March 2008 (2008-03-20)<br>* abstract; figures *<br>* paragraph [0016] *<br>* paragraph [0018] *<br>* paragraph [0039] *<br>----- | 1-6,8-15 | |
| X | DE 196 30 553 A1 (RUEHLE REINER [DE])<br>29 January 1998 (1998-01-29)<br>* abstract; figures *<br>* column 1, line 40 - column 2, line 22 *<br>----- | 1-3,5,6,<br>9-14 | TECHNICAL FIELDS SEARCHED (IPC)<br><br>B62M |
| X | EP 0 846 614 A1 (SONY CORP [JP])<br>10 June 1998 (1998-06-10)<br>* abstract; figures *<br>* column 2, line 40 - column 3, line 22 *<br>* column 7, line 15 - line 44 *<br>----- | 1,10 | |
| X | DE 103 25 822 A1 (FIEDLER VOLKER [DE])<br>30 December 2004 (2004-12-30)<br>* the whole document *<br>-----<br>-/-- | 1,10 | |

The present search report has been drawn up for all claims

| Place of search | Date of completion of the search | Examiner |
|---|---|---|
| The Hague | 28 August 2012 | Van Prooijen, Tom |

EPO FORM 1503 03.82 (P04C01)

Europäisches
Patentamt
European
Patent Office
Office européen
des brevets

**EUROPEAN SEARCH REPORT**

Application Number

EP 12 17 1542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 545 437 B1 (STROTHMANN ROLF [DE]) 8 April 2003 (2003-04-08) * abstract; figures * * column 2 * * column 4 * | 1,10 | |
| A,D | EP 0 559 231 A1 (YAMAHA MOTOR CO LTD [JP]) 8 September 1993 (1993-09-08) * abstract * | 1,10 | |
| A,D | WO 2006/091089 A2 (IDBIKE [NL]; ROOVERS GIJSBERTUS CORNELIS FR [NL]; D HERRIPON BASTIAAN) 31 August 2006 (2006-08-31) * claim 31 * | 1,10 | |
| A,D | NL 2 001 292 C2 (KONINK GAZELLE B V [NL]) 29 December 2008 (2008-12-29) * abstract * | 1,10 | |

TECHNICAL FIELDS
SEARCHED (IPC)

The present search report has been drawn up for all claims

| Place of search | Date of completion of the search | Examiner |
|---|---|---|
| The Hague | 28 August 2012 | Van Prooijen, Tom |

## ANNEX TO THE EUROPEAN SEARCH REPORT
## ON EUROPEAN PATENT APPLICATION NO.

EP 12 17 1542

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2012

| Patent document cited in search report | Publication date | Patent family member(s) | Publication date |
|---|---|---|---|
| DE 102009000919 A1 | 19-08-2010 | DE 102009000919 A1<br>WO 2010094515 A1 | 19-08-2010<br>26-08-2010 |
| DE 19601194 A1 | 24-07-1997 | NONE | |
| US 2008071436 A1 | 20-03-2008 | CA 2579917 A1<br>EP 1799538 A1<br>EP 2338782 A2<br>US 2008071436 A1<br>WO 2006029514 A1 | 23-03-2006<br>27-06-2007<br>29-06-2011<br>20-03-2008<br>23-03-2006 |
| DE 19630553 A1 | 29-01-1998 | AU 4010097 A<br>DE 19630553 A1<br>DE 19780720 D2<br>WO 9803392 A1 | 10-02-1998<br>29-01-1998<br>14-10-1999<br>29-01-1998 |
| EP 0846614 A1 | 10-06-1998 | DE 69711342 D1<br>DE 69711342 T2<br>DE 69728437 D1<br>DE 69728437 T2<br>EP 0846614 A1<br>EP 0976649 A2<br>JP 3682590 B2<br>JP 10035576 A<br>TW 470037 U<br>US 6247548 B1<br>US 2003047369 A1<br>WO 9745316 A1 | 02-05-2002<br>21-11-2002<br>06-05-2004<br>03-03-2005<br>10-06-1998<br>02-02-2000<br>10-08-2005<br>10-02-1998<br>21-12-2001<br>19-06-2001<br>13-03-2003<br>04-12-1997 |
| DE 10325822 A1 | 30-12-2004 | NONE | |
| US 6545437 B1 | 08-04-2003 | AU 1757499 A<br>DE 19755309 A1<br>EP 1037795 A1<br>ES 2173656 T3<br>JP 2002508280 A<br>US 6545437 B1<br>WO 9930959 A1 | 05-07-1999<br>17-06-1999<br>27-09-2000<br>16-10-2002<br>19-03-2002<br>08-04-2003<br>24-06-1999 |
| EP 0559231 A1 | 08-09-1993 | DE 69301472 D1<br>DE 69301472 T2<br>EP 0559231 A1<br>JP 2634121 B2<br>JP 5246377 A<br>US 5375676 A | 21-03-1996<br>27-06-1996<br>08-09-1993<br>23-07-1997<br>24-09-1993<br>27-12-1994 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                   EP 12 17 1542

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2012

| Patent document cited in search report | | Publication date | Patent family member(s) | | | Publication date |
|---|---|---|---|---|---|---|
| WO 2006091089 | A2 | 31-08-2006 | AT | 469818 | T | 15-06-2010 |
| | | | CN | 101128356 | A | 20-02-2008 |
| | | | DK | 1863700 | T3 | 27-09-2010 |
| | | | EP | 1863700 | A2 | 12-12-2007 |
| | | | ES | 2348493 | T3 | 07-12-2010 |
| | | | JP | 4892494 | B2 | 07-03-2012 |
| | | | JP | 2008531394 | A | 14-08-2008 |
| | | | US | 2009120211 | A1 | 14-05-2009 |
| | | | WO | 2006091089 | A2 | 31-08-2006 |
| NL 2001292 | C2 | 29-12-2008 | NL | 2001292 | A1 | 15-05-2008 |
| | | | NL | 2001292 | C2 | 29-12-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 559231 A
- WO 2006091089 A
- NL 2001292
- DE 102009000919
- US 2008071436 A